# EUROPEAN PATENT SPECIFICATION

(11) **EP 0 320 430 B1**
(45) Date of publication and mention of the grant of the patent: **19.01.1994**
(21) Application number: 88630091.2
(22) Date of filing: 10.05.1988
(51) Int. Cl.: H01B 17/58, H01B 17/30

(54) **Bushing and gasket assembly**
Vorrichtung mit Buchse und Dichtung
Dispositif à manchon et joint d'étanchéité

(30) Priority: 11.12.1987 US 131691
(43) Date of publication of application: 14.06.1989
(73) Proprietor: COOPER POWER SYSTEMS, INC., Houston Texas 77002 (US)
(72) Inventor: Muench, Frank J., Waukesha Wisconsin 53188 (US)
(74) Representative: Weydert, Robert

(56) References cited:
- DE-A- 2 623 156
- US-A- 3 803 523

## Description

The invention relates to an electrical apparatus. More specifically, the invention relates to electrical bushing assemblies.

A known bushing assembly includes an elongated contact and an insulating shank molded around the contact. The shank includes integral flanges or ears which can be fastened to the tank of an electrical apparatus, such as an oil insulated transformer. Each flange or ear has therethrough an aperture, and the tank includes mounting studs extending through the apertures. Nuts are threaded onto the mounting studs to secure the bushing to the tank. A portion of the shank and the contact extend through a bore in the tank wall, and an annular gasket surrounds the shank portion between the bushing and the tank wall to seal the joint therebetween.

In some known bushing assemblies, the gasket is located in a complementary recess in the bushing, with the gasket completely filling the recess when the gasket is uncompressed. As the bushing is secured to the tank and the gasket is compressed, the gasket acts like a hydraulic fluid, concentrating stress on the molded insulating shank of the bushing. If this stress exceeds the material strength of the shank, the shank breaks.

A typical tank wall is not completely flat. Furthermore, the tank wall can bulge when the oil inside is heated by transformer losses, or can buckle as the oil cools. If the nuts are tightened down so that the ears are tightly mated with the tank wall, a change in the shape of the tank wall can fracture the bushing ears.

Typical bushing assemblies of the type discussed hereinabove are known for example from DE-A-26 23 156 and US-A-3 803 523.

Particularly, the bushing disclosed in DE-A-26 23 156 requires a metal mounting flange separate from the shank portion.

In US-A-3 803 523, there is shown and described an electrical apparatus according to the preamble of claim 1.

The electrical apparatus known from US-A-3 803 523 comprises a container for an electrical mechanism. The container includes a wall having an outer surface and having therethrough a bore. The apparatus also comprises a bushing including a contact connected to the electrical mechanism, a portion extending through the bore, and a surface facing the outer surface of the wall and having therein an endless recess, the recess surrounding the bushing portion. The apparatus also comprises an endless gasket located in the recess surrounding the portion and means for securing the bushing to the container and for compressing the gasket between the bushing and outer surface of the container.

It is a primary object of the present invention to overcome the aforementioned problems associated with the prior art bushing assemblies.

To achieve this, the electrical apparatus of the invention is characterized by the features claimed in the characterized part of claim 1. Specifically, according to the invention, the endless gasket surrounding the bushing portion has a volume when the gasket is uncompressed that is less than the volume of the recess.

Because the gasket does not entirely fill the recess, when the gasket is compressed, the gasket can flow into the voids created by the gasket instead of exerting stress on the shank. This assists in preventing breakage of the shank.

Advantageous embodiments of the invention are claimed in the subclaims.

In a preferred embodiment the invention provides an electrical apparatus, such as an oil insulated transformer, comprising a container which includes a generally planar wall having an outer surface and having therethrough a generally circular bore. The outer wall has fixedly mounted thereon a plurality of mounting studs located adjacent and in surrounding relation to the bore.

Preferably, the contact is elongated and extends through the bore in the container wall. The bushing also includes an insulating shank molded around the contact. The shank includes a portion surrounding the contact and extending through the bore, and a generally planar surface facing the outer surface of the container and having therein an annular recess surrounding the above-mentioned shank portion. In the preferred embodiment, the radially inner boundary of the recess is defined by the outer surface of the shank portion, and the radially outer boundary of the recess is defined by a radially outer surface that is opposed to and faces the outer surface of the shank portion. The shank also includes a plurality of ears or flange portions having therethrough respective apertures receiving respective mounting studs. The bushing further includes, on the planar surface, a plurality of projections located adjacent each of the apertures and engaging the outer surface of the container so that the bushing surface is spaced from the outer surface of the container. The force required to crush the projections is less than the force required to break the bushing ears.

The apparatus also comprises a generally annular gasket located in the recess and surrounding the shank portion. The gasket has a circular outer surface engaging the outer surface of the recess and a generally circular inner surface engaging the outer surface of the shank portion. The gasket is held in the recess by the engagement of the gasket with the walls of the recess. Furthermore, the gasket has a volume that is less than the volume of the recess. More particularly, in the preferred embodiment, the inner surface of the gasket has therein a plurality of recesses, so that the gasket forms a plurality of radially inwardly extending, finger-like portions engaging the outer surface of the shank portion.

This securely holds the gasket in place, eliminating problems with the present gasket and bushing design. Present designs of the bushing and gasket allow the gasket to either shift in its recess because the outer diameter of the inner portion of the bushing is less than the inner diameter of the gasket, or the gasket fills the recess completely causing stress to the bushing, when used across a presently used range of hole sizes.

The apparatus further comprises, on each of the mounting studs, a nut threaded onto the mounting stud for securing the bushing to the container and for compressing the gasket between the bushing and the outer surface of the container. When the nuts are tightened to force the bushing, i.e., the projections, against the container wall, the gasket is compressed. As explained above, the compressed gasket acts like a hydraulic fluid. However, because the gasket does not entirely fill the recess, the gasket can flow into the voids created by the recesses in the gasket instead of exerting stress on the shank. This assists in preventing breakage of the shank.

If the nuts are tightened too much, or if the container wall changes shape, the bushing projections will collapse before the bushing ears fracture. Thus, the bushing projections further reduce damage to the shank.

Other features and advantages of the invention will become apparent to those skilled in the art upon review of the following detailed description, claims and drawings.

### DESCRIPTION OF THE DRAWINGS

Fig. 1 is a side elevational view, partially in cross-section, of an electrical apparatus embodying the invention and including a gasket.

Fig. 2 is a view taken along line 2-2 in Fig. 1.

Fig. 3 is a view taken along line 3-3 in Fig. 1.

Fig. 4 is a perspective view of the gasket.

Before one embodiment of the invention is explained in detail, it is to be understood that the invention is not limited in its application to the details of construction and the arrangements of components set forth in the following description or illustrated in the drawings. The invention is capable of other embodiments and of being practiced or being carried out in various ways. Also, it is to be understood that the phraseology and terminology used herein is for the purpose of description and should not be regarded as limiting.

### DESCRIPTION OF THE PREFERRED EMBODIMENT

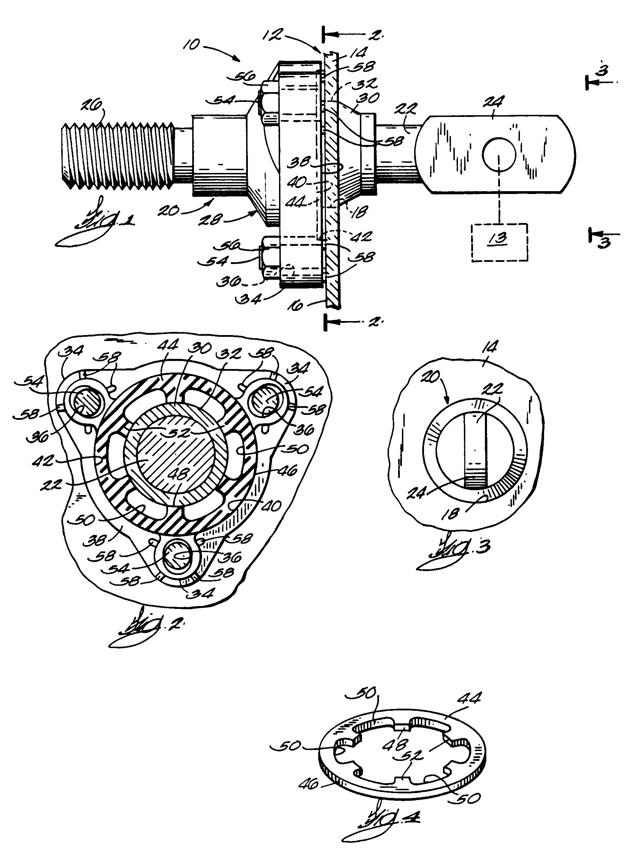

Illustrated in the drawings is an electrical apparatus 10, such as an oil insulated transformer, embodying the invention. As shown in Fig. 1, the apparatus 10 comprises a container 12 (partially shown) containing an electrical mechanism 13 (shown schematically). The container 12 includes a generally planar wall 14 having an outer surface 16 and having therethrough a circular bore 18.

The apparatus 10 also comprises a bushing 20 including an elongated contact 22 connected to the electrical mechanism 13. In the illustrated construction, the contact 22 extends through the container bore 18 and includes an inner end 24 located within the container 12 and connected to the mechanism 13, and a threaded outer end 26 located outside of the container 12. The bushing 20 also includes an insulating shank 28 molded around the contact 22 and made of a suitable material such as epoxy. The shank 28 includes an annular portion 30 which surrounds the contact 22 and extends through the container bore 18, and which includes a generally cylindrical outer surface 32. The shank 28 also includes three flange portions or ears 34 having therein respective apertures 36. The shank 28 also includes a generally planar surface 38 facing the outer surface 16 of the container 12 and having therein an endless recess 40 which surrounds the shank portion 30 and which has an area. In the preferred embodiment, the recess 40 is annular and has a radially inner boundary defined by the outer surface 32 of the shank portion 30, and the shank 28 includes a generally cylindrical surface 42 opposed to and facing the outer surface 32 of the shank Portion 30 and defining the radially outer boundary of the recess 40. Thus, the outer surface 32 of the shank portion 30 and the radially outer surface 42 constitute opposed, radially inner and outer surfaces partially defining the recess 40.

The apparatus 10 also comprises an endless gasket 44 located in the recess 40 and surrounding the shank portion 30. The gasket 44 is made of a suitable material such as rubber. In the preferred embodiment, the gasket 44 is generally annular and includes a circular outer surface 46 engaging the radially outer surface 42 of the bushing 20 and a generally circular inner surface 48 engaging the outer surface 32 of the shank portion 30. Because of the engagement of the gasket 44 with the inner and outer surfaces of the recess 40, the gasket 44 is retained in the recess 40 when the gasket 44 is uncompressed.

The gasket 44 has an area, when the gasket 44 is uncompressed, that is less than the area of the recess 40. More particularly, the inner surface 48 of the gasket 44 has a shape that is different from the shape of the outer surface 32 of the shank portion 30. Still more particularly, in the preferred embodiment, the inner surface 48 of the gasket 44 has therein a plurality of recesses 50. Accordingly, the gasket 44 forms a plurality of radially inwardly extending, finger-like portions 52 engaging the outer surface 32 of the shank portion 30. Because the area of the gasket 44 is less than the area of the recess 40, the gasket 44, when compressed, flows into the voids defined by the recesses 50 rather than exerting stress on the bushing 20.

The apparatus 10 further comprises means for securing the bushing 20 to the container 12 and for compressing the gasket 44 between the bushing 20 and the outer surface 16 of the container 12. While various suitable securing and compressing means can be employed, in the preferred embodiment, such means includes means for securing the flange portions or ears 34 of the bushing 20 to the container 12. While various suitable means can be used for securing the flange portions 34 to the container 12, in the illustrated construction, such means includes, for each of the apertures 36, a respective externally threaded stud or member 54 fixedly mounted on the container wall and extending through the aperture 36. The securing means further includes a nut 56 threaded onto each stud 54 so that the associated flange portion 34 is captured between the nut 56 and the outer surface 16 of the container 20.

The apparatus 10 further comprises deformable means for resisting fracturing of the flange portions 34. While various suitable deformable means can be employed, in the preferred embodiment, such means includes, on the bushing surface 38, a plurality of projections 58 located adjacent each of the apertures 36 and engaging the outer surface 16 of the container 12 so that the bushing surface 38 is spaced from the outer surface 16 of the container 12. The force required to crush the projections 58 is less than the force required to break the flange portions 34. Alternatively stated, the compression strength of the projections 58 on each flange portion 34 is less than the cantilever strength of that flange portion 34. Accordingly, the projections 58 will deform or be crushed before the flange portions 34 will fracture.

It is noted that the compression strength of a projection 58 is a function of the area of the projection 58 in contact with the container surface 16. More particularly, the greater the area of a projection 58, the greater its compression strength. Thus, the overall compression strength of the projections 58 on a flange portion 34 can be varied, and can be made less than the cantilever strength of the flange portion 34, by varying the area of the projections 58. In the preferred embodiment, each flange portion 34 has thereon four projections 58, and each projection 58 has dimensions of approximately 0.2 x 0.3 cm (0.08 x 0.125 inches) (area = 0.06 cm² (0.01 square inches)) , with a thickness of approximately 0.05 cm (0.02 inches).

Various features of the invention are set forth in the following claims.

## Claims

1. An electrical apparatus (10) comprising a container (12) adapted to contain an electrical mechanism (13), said container (12) including a wall (14) having an outer surface (16) and having therethrough a bore (18),
a bushing (20) including a contact (22) adapted to be connected to the electrical mechanism (13), a portion (30) extending through said bore (18), and a surface (38) facing said outer surface (16) of said wall (14) and having therein an endless recess (40), said recess (40) surrounding said portion (30) and having a volume,
an endless gasket (44) located in said recess (40) and surrounding said portion (30), and
means (54,56) for securing said bushing (20) to said container (12) and for compressing said gasket (44) between said bushing (20) and said outer surface (16) of said container (12),
characterized in that said endless gasket (44) has a volume when said gasket (44) is uncompressed that is less than said volume of said recess (40).

2. An apparatus as set forth in claim 1, characterized in that said bushing (20) includes opposed, radially inner and outer surfaces (32,42) partially defining said recess (40), and in that said gasket (44) engages said inner and outer surfaces (32,42) when said gasket (44) is uncompressed.

3. An apparatus as set forth in claim 2, characterized in that said portion (30) of said bushing (20) has an outer surface (32), and in that said radially inner surface (32) is said outer surface (32) of said portion (30)

4. An apparatus as set forth in claim 2, characterized in that said radially inner surface (32) has a shape and said gasket (44) has a radially inner surface (48) engaging said radially inner surface (32) of said bushing (20) and having a shape that is different from said shape of said radially inner surface (32) of said bushing (20).

5. An apparatus as set forth in claim 1, characterized in that said recess (40) is annular, and in that said gasket (44), is generally annular and includes a circular outer surface (42), and a generally circular inner surface (48) having therein a plurality of recesses (50).

6. An apparatus as set forth in claim 1, characterized in that said bushing (20) includes a flange portion (34) having therethrough an aperture (36), and in that said securing and compressing means (54,56) secures said flange portion (34) to said container (12).

7. An apparatus as set forth in claim 6, characterized in that said securing and compressing means (54,56) includes a member (54) extending through said aperture (36).

8. An apparatus as set forth in claim 7, characterized in that said member (54) is an externally threaded stud (54) fixedly mounted on said wall, (14) and in that said securing and compressing means (54,56) also includes a nut (56) threaded onto said stud (54) so that said flange portion (34) is captured between said nut (56) and said wall (14).

9. An apparatus as set forth in claim 6, characterized in further comprising deformable means (58) for resisting fracturing of said flange portion (34).

10. An apparatus as set forth in claim 9, characterized in that said deformable means (58) includes, on said bushing surface (38), a plurality of projections (58) located adjacent said aperture (36) and engaging said outer surface (16) of said container (12) so that said bushing surface (38) is spaced from said outer surface (16) of said container (12), and in that the force required to crush said projections (58) is less than the force required to break said flange portion (34).

11. An electrical apparatus as set forth in claim 1, characterized in that said bushing (20) includes a flange portion (34), said means (54,56) for securing said bushing (20) to said container (12) including means for securing said flange portion (34) to said container (12), and in further comprising deformable means (68) for resisting fracturing of said flange portion (34).

12. An apparatus as set forth in claim 11, characterized in that said flange portion (34) has therethrough an aperture (36) and includes a surface (38) facing said outer surface (16) of said container (12), said securing means (54,56) includes a member (54) extending through said aperture (36), and in that said deformable means (58) includes, on said flange portion surface (38), a plurality of projections (58) located adjacent said aperture (36) and engaging said outer surface (16) of said container (12) so that said flange portion surface (38) is spaced form said outer surface (16) of said container (12), the force required to crush said projections (58) being less than the force required to break said flange portion (34).

13. An apparatus as set forth in claim 12, characterized in that said member (54) is an externally threaded stud (54) fixedly mounted on said wall (14), and in that said securing means (54,56) further includes a nut (56) threaded onto said stud (54) so that said flange portion (34) is captured between said nut (56) and said outer surface (16) of said container (12).

14. An apparatus as set forth in claim 11, characterized in that said endless gasket (44) surrounding said bushing portion (30) is located between said bushing (20) and said outer surface (16) of said container (12).

15. An apparatus as set forth in claim 1, characterized in that said endless gasket (44) located in said recess (40) has an area when said gasket (44) is uncompressed that is less than said area of said recess (40).

16. An apparatus as set forth in claim 15, characterized in that said bushing (20) includes opposed, radially inner and outer surfaces (32,42) partially defining said recess (40), and in that said gasket (44) engages said inner and outer surfaces (32,42) when said gasket (44) is uncompressed.

17. An apparatus as set forth in claim 16, characterized in that said portion (30) of said bushing (20) has an outer surface (32), and in that said radially inner surface (32) is said outer surface (32) of said portion (30),

18. An apparatus as set forth in claim 16, characterized in that said radially inner surface (32) has a shape and said gasket (44) has a radially inner surface (48) engaging said radially inner surface (32) of said bushing (20) and having a shape that is different from said shape of said radially inner surface (32) of said bushing (20).

19. An apparatus as set forth in claim 15, characterized in that said recess (40) is annular, and in that said gasket (44) is generally annular and includes a circular outer surface (42), and a generally circular inner surface (48) having therein a plurality of recesses (50).

20. An apparatus as set forth in claim 15, characterized in that said bushing (20) includes a flange portion (34) having therethrough an aperture (36) adapted to receive a mounting stud (54) on the container (12).

21. An apparatus as set forth in claim 20, characterized in further comprising deformable means (58) for resisting fracturing of said flange portion (34).

22. An apparatus as set forth in claim 21, characterized in that said deformable means (58) includes, on said bushing surface (38), a plurality of projections (58) located adjacent said aperture (36) and engaging said outer surface (16) of said container (12) so that said bushing surface (38) is spaced from said outer surface (16) of said container (12), and in that the force required to crush said projections (58) is less than the force required to break said flange portion (34).

23. An apparatus as set forth in claim 1, characterized in further comprising a flange portion (34) having therethrough an aperture (36) adapted to receive a mounting stud (54) on the container (12), and deformable means (58) for resisting fracturing of said portion (34).

24. An apparatus as set forth in claim 23, characterized in that said portion (34) includes a surface (38) adapted to face the outer surface (16) of the container (12), and in that said deformable means (58) includes, on said surface (58), a plurality of projections (58) located adjacent said aperture (36) and adapted to engage the outer surface (16) of the container (12) so that said flange portion surface (38) is spaced from the outer surface (16) of the container (12), the force required to crush said projections (58) being less than the force required to break said flange portion (34).

25. An apparatus as set forth in claim 23, characterized in that said endless gasket (44) surrounding said bushing portion (30) is adapted to be located between said bushing (20) and the outer surface (16) of the container (12).

## Patentansprüche

1. Elektrische Vorrichtung (10) mit einem Behälter (12), der dazu ausgebildet ist, einen elektrischen Mechanismus (13) aufzunehmen, wobei der Behälter (12) eine Wand (14) aufweist, die eine äußere Oberfläche (16) hat und mit einer Durchgangsbohrung (18) versehen ist;
einer Durchführung (20), die einen Kontakt (22) aufweist, der dazu ausgebildet ist, mit dem elektrischen Mechanismus (13) verbunden zu werden, einen Teil (30), der sich durch die Bohrung (18) erstreckt, und eine Oberfläche (38), die der äußeren Oberfläche (16) der Wand (14) zugeordnet ist und in der eine endlose Vertiefung (40) vorgesehen ist, wobei die Vertiefung (40) den Teil (30) umgibt und ein Volumenhat;
einer endlosen Dichtung (44), die in der Vertiefung (40) angeordnet ist und den Teil (30) umgibt; und
einer Einrichtung (54, 56) zum Befestigen der Durchführung (20) an dem Behälter (12) und zum Zusammendrücken der Dichtung (44) zwischen der Durchführung (20) und der äußeren Oberfläche (16) des Behälters (12),
dadurch gekennzeichnet, daß die endlose Dichtung (44) ein Volumen hat, wenn die Dichtung (44) nicht zusammengedrückt ist, das kleiner als das Volumen der Vertiefung (40) ist.

2. Vorrichtung nach Anspruch 1, dadurch gekennzeichnet, daß die Durchführung (20) eine radial innere und eine entgengesetzte radial äußere Oberfläche (32, 42) aufweist, welche die Vertiefung (40) teilweise begrenzen, und daß die Dichtung (44) die innere und äußere Oberfläche (32, 42) berührt, wenn die Dichtung (44) nicht zusammengedrückt ist.

3. Vorrichtung nach Anspruch 2, dadurch gekennzeichnet, daß der Teil (30) der Durchführung (20) eine äußere Oberfläche (32) hat und daß die radial innere Oberfläche (32) die äußere Oberfläche (32) des Teils (30) ist.

4. Vorrichtung nach Anspruch 2, dadurch gekennzeichnet, daß die radial innere Oberfläche (32) eine Form hat und daß die Dichtung (44) eine radial innere Oberfläche (48) hat, die die radial innere Oberfläche (32) der Durchführung (20) berührt und eine Form hat, die von der Form der radial inneren Oberfläche (32) der Durchführung (20) verschieden ist.

5. Vorrichtung nach Anspruch 1, dadurch gekennzeichnet, daß die Vertiefung (40) ringförmig ist und daß die Dichtung (44) insgesamt ringförmig ist und eine kreisförmige äußere Oberfläche (42) sowie eine insgesamt kreisförmige innere Oberfläche (48), in der mehrere Vertiefungen (50) vorgesehen sind, hat.

6. Vorrichtung nach Anspruch 1, dadurch gekennzeichnet, daß die Durchführung (20) einen Flanschteil (34) mit einer Durchgangsöffnung (36) aufweist und daß die Befestigungs- und Zusammendrückeinrichtung (54, 56) den Flanschteil (34) an dem Behälter (12) befestigt.

7. Vorrichtung nach Anspruch 6, dadurch gekennzeichnet, daß die Befestigungs- und Zusammendrückeinrichtung (54, 56) ein Teil (54) aufweist, das sich durch die Öffnung (36) erstreckt.

8. Vorrichtung nach Anspruch 7, dadurch gekennzeichnet, daß das Teil (54) ein mit Außengewinde versehener Bolzen (54) ist, der an der Wand (14) fest angebracht ist, und daß die Befestigungs- und Zusammendrückeinrichtung (54, 56) außerdem eine Mutter (56) aufweist, die auf den Bolzen (54) geschraubt wird, so daß der Flanschteil (34) zwischen der Mutter (56) und der Wand (14) eingespannt wird.

9. Vorrichtung nach Anspruch 6, gekennzeichnet weiter durch eine verformbare Einrichtung (58), die sich einem Bruch des Flanschteils (34) widersetzt.

10. Vorrichtung nach Anspruch 9, dadurch gekennzeichnet, daß die verformbare Einrichtung (58) an der Durchführungsoberfläche (38) mehrere Vorsprünge (58) aufweist, die an der Öffnung (36) angeordnet sind und die äußere Oberfläche (16) des Behälters (12) erfassen, so daß die Durchführungsoberfläche (38) Abstand von der äußeren Oberfläche (16) des Behälters (12) hat, und daß die Kraft, die erforderlich ist, um die Vorsprünge (58) zusammenzudrücken, kleiner ist als die Kraft, die erforderlich ist, um den Flanschteil (34) zum Brechen zu bringen.

11. Elektrische Vorrichtung nach Anspruch 1, dadurch gekennzeichnet, daß die Durchführung (20) einen Flanschteil (34) aufweist, daß die Einrichtung (54, 56) zum Befestigen der Durchführung (20) an dem Behälter (12) eine Einrichtung aufweist zum Befestigen des Flanschteils (34) an dem Behälter (12) und weiter mit einer verformbaren Einrichtung (68) versehen ist, die sich einem Bruch des Flanschteils (34) widersetzt.

12. Vorrichtung nach Anspruch 11, dadurch gekennzeichnet, daß der Flanschteil (34) eine Durchgangsöffnung (36) hat und eine Oberfläche (38) aufweist, die der äußeren Oberfläche (16) des Behälters (12) zugewandt ist, daß die Befestigungseinrichtung (54, 56) ein Teil (54) aufweist, das sich durch die Öffnung (36) erstreckt, und daß die verformbare Einrichtung (58) an der Flanschteiloberfläche (38) mehrere Vorsprünge (58) aufweist, die an der Öffnung (36) angeordnet sind und die äußere Oberfläche (16) des Behälters (12) erfassen, so daß die Flanschteiloberfläche (38) Anstand von der äußeren Oberfläche (16) des Behälters (12) hat, wobei die Kraft, die erforderlich ist, um die Vorsprünge (58) zusammenzudrücken, kleiner ist als die Kraft, die erforderlich ist, um den Flanschteil (34) zum Brechen zu bringen.

13. Vorrichtung nach Anspruch 12, dadurch gekennzeichnet, daß das Teil (54) ein mit Außengewinde versehener Bolzen (54) ist, der an der Wand (14) fest angebracht ist, und daß die Befestigungseinrichtung (54, 56) weiter eine Mutter (56) aufweist, die auf den Bolzen (54) geschraubt wird, so daß der Flanschteil (34) zwischen der Mutter (56) und der äußeren Oberfläche (16) des Behälters (12) eingespannt wird.

14. Vorrichtung nach Anspruch 11, dadurch gekennzeichnet, daß die endlose Dichtung (44), die den Durchführungsteil (30) umgibt, zwischen der Durchführung (20) und der äußeren Oberfläche (16) des Behälters (12) angeordnet ist.

15. Vorrichtung nach Anspruch 1, dadurch gekennzeichnet, daß die endlose Dichtung (44), die in der Vertiefung (40) angeordnet ist, einen Oberflächeninhalt hat, wenn die Dichtung (44) nicht zusammengedruckt ist, der kleiner als der Oberflächeninhalt der Vertiefung (40) ist.

16. Vorrichtung nach Anspruch 15, dadurch gekennzeichnet, daß die Durchführung (20) eine radial innere und eine gegenüberliegende radial äußere Oberfläche (32, 42) aufweist, welche die Vertiefung (40) teilweise begrenzen, und daß die Dichtung (44) die innere und äußere Oberfläche (32, 42) berührt, wenn die Dichtung (44) nicht zusammengedrückt ist.

17. Vorrichtung nach Anspruch 16, dadurch gekennzeichnet, daß der Teil (30) der Durchführung (20) eine äußere Oberfläche (32) hat und daß die radial innere Oberfläche (32) die äußere Oberfläche (32) des Teils (30) ist.

18. Vorrichtung nach Anspruch 16, dadurch gekennzeichnet, daß die radial innere Oberfläche (32) eine Form hat und daß die Dichtung (44) eine radial innere Oberfläche (48) hat, die die radial innere Oberfläche (32) der Durchführung (20) berührt und eine Form hat, die von der Form der radial inneren Oberfläche (32) der Durchführung (20) verschieden ist.

19. Vorrichtung nach Anspruch 15, dadurch gekennzeichnet, daß die Vertiefung (40) ringförmig ist und daß die Dichtung (44) insgesamt ringförmig ist und eine kreisförmige äußere Oberfläche (42) sowie eine insgesamt kreisförmige innere Oberfläche (48), in der mehrere Vertiefungen (50) vorgesehen sind, aufweist.

20. Vorrichtung nach Anspruch 15, dadurch gekennzeichnet, daß die Durchführung (20) einen Flanschteil (34) aufweist, der eine Durchgangsöffnung (36) hat, die vorgesehen ist, einen Befestigungsbolzen (54) an dem Behälter (12) aufzunehmen.

21. Vorrichtung nach Anspruch 20, gekennzeichnet weiter durch eine verformbare Einrichtung (58), die sich einem Bruch des Flanschteils (34) widersetzt.

22. Vorrichtung nach Anspruch 21, dadurch gekennzeichnet, daß die verformbare Einrichtung (58) an der Durchführungsoberfläche (38) mehrere Vorsprünge (58) aufweist, die an der Öffnung (36) angeordnet sind und die äußere Oberfläche (16) des Behälters (12) erfassen, so daß die Durchführungsoberfläche (38) Anstand von der äußeren Oberfläche (16) des Behälters (12) hat, und daß die Kraft, die erforderlich ist, um die Vorsprünge (58) zusammenzudrücken, kleiner ist als die Kraft, die erforderlich ist, um den Flanschteil (34) zum Brechen zu bringen.

23. Vorrichtung nach Anspruch 21, gekennzeichnet weiter durch einen Flanschteil (34), der eine Durchgangsöffnung (36) hat, die dazu ausgebildet ist, einen Befestigungsbolzen (54) an dem Behälter (12) aufzunehmen, und eine verformbare Einrichtung (58), die sich einem Bruch des Teils (34) widersetzt.

24. Vorrichtung nach Anspruch 23, dadurch gekennzeichnet, daß der Teil (34) eine Oberfläche (38) aufweist, die dazu ausgebildet ist, der äußeren Oberfläche (16) des Behälters (12) zugewandt zu sein, und daß die verformbare Einrichtung (58) an der Oberfläche (38) mehrere Vorsprünge (58) aufweist, die an der Öffnung (36) angeordnet und dazu ausgebildet sind, die äußere Oberfläche (16) des Behälters (12) zu erfassen, so daß die Flanschteiloberfläche (38) Abstand von der äußeren Oberfläche (16) des Behälters (12) hat, wobei die Kraft, die erforderlich ist, um die Vorsprünge (58) zusammenzudrücken, kleiner ist als die Kraft, die erforderlich ist, um den Flanschteil (34) zum Brechen zu bringen.

25. Vorrichtung nach Anspruch 23, dadurch gekennzeichnet, daß die endlose Dichtung (44), die den Druchführungsteil (30) umgibt, dazu ausgebildet ist, zwischen der Durchführung (20) und der äußeren Oberfläche (16) des Behälters (12) angeordnet zu werden.

## Revendications

1. Appareil électrique (10) comprenant un réceptacle (12) conçu pour contenir un mécanisme électrique (13), ledit réceptacle (12) englobant une paroi (14) comportant une surface externe (16) et à travers laquelle est pratiqué un alésage (18),
un manchon (20) englobant un contact (22) conçu pour être raccordé au mécanisme électrique (13), une portion (30) s'étendant à travers ledit alésage (18), ainsi qu'une surface (38) opposée à ladite surface externe (16) de ladite paroi (14) et dans laquelle est pratiqué un évidement sans fin (40), ledit évidement (40) entourant ladite portion (30) et comportant un volume,
un joint d'étanchéité sans fin (44) disposé dans ledit évidement (40) et entourant ladite portion (30), et
des moyens (54, 56) pour fixer ledit manchon (20) audit réceptacle (12) et pour comprimer ledit joint d'étanchéité (44) entre ledit manchon (20) et ladite surface externe (16) dudit réceptacle (12),
caractérisé en ce que ledit joint d'étanchéité sans fin (44) possède un volume, lorsque ledit joint d'étanchéité (44) est à l'état non comprimé, qui est inférieur audit volume dudit évidement (40).

2. Appareil selon la revendication 1, caractérisé en ce que ledit manchon (20) englobe des surfaces opposées radialement interne et externe (32, 42) définissant partiellement ledit évidement (40), et en ce que ledit joint d'étanchéité (44) vient se mettre en contact avec lesdites surfaces interne et externe (32, 42) lorsque ledit joint d'étanchéité (44) est à l'état non comprimé.

3. Appareil selon la revendication 2, caractérisé en ce que ladite portion (30) dudit manchon (20) comporte une surface externe (32), et en ce que ladite surface radialement interne (32) est ladite surface externe (32) de ladite portion (30).

4. Appareil selon la revendication 2, caractérisé en ce que ladite surface radialement interne (32) est configurée et ledit joint d'étanchéité (44) possède une surface radialement interne (48) venant se mettre en contact avec ladite surface radialement interne (32) dudit manchon (20) et dont la configuration est différente de ladite configuration de ladite surface radialement interne (32) dudit manchon (20).

5. Appareil selon la revendication 1, caractérisé en ce que ledit évidement (40) est annulaire, et en ce que ledit joint d'étanchéité (44) est généralement annulaire et englobe une surface externe circulaire (42) et une surface interne (48) généralement circulaire dans laquelle sont pratiqués plusieurs évidements (50).

6. Appareil selon la revendication 1, caractérisé en ce que ledit manchon (20) englobe une portion de bride (34) à travers laquelle est pratiquée une ouverture (34), et en ce que lesdits moyens de fixation et de compression (54, 56) fixent ladite portion de bride (34) audit réceptacle (12).

7. Appareil selon la revendication 6, caractérisé en ce que lesdits moyens de fixation et de compression (54, 56) englobent un élément (54) s'étendant à travers ladite ouverture (36).

8. Appareil selon la revendication 7, caractérisé en ce que ledit élément (54) est un tenon (54) à filet externe monté à demeure sur ladite paroi (14), et en ce que lesdits moyens de fixation et de compression (54, 56) englobent également un écrou (56) vissé sur ledit tenon (54), si bien que ladite portion de bride (34) est capturée entre ledit écrou (56) et ladite paroi (14).

9. Appareil selon la revendication 6, caractérisé en ce qu'il comprend, en outre, un moyen déformable (58) pour résister à la fracture de ladite portion de bride (34).

10. Appareil selon la revendication 9, caractérisé en ce que ledit moyen déformable (58) englobe, sur ladite surface de manchon (38), plusieurs saillies (58) disposées en position adjacente à ladite ouverture (36) et venant se mettre en contact avec ladite surface externe (16) dudit réceptacle (12), de telle sorte que ladite surface de manchon (38) est écartée de ladite surface externe (16) dudit réceptacle (12), et en ce que la force requise pour écraser lesdites saillies (58) est inférieure à la force requise pour rompre ladite portion de bride (34).

11. Appareil électrique selon la revendication 1, caractérisé en ce que ledit manchon (20) englobe une portion de bride (34), lesdits moyens (54, 56) pour fixer ledit manchon (20) audit réceptacle (12) englobant des moyens pour fixer ladite portion de bride (34) audit réceptacle (12), et en ce qu'il comprend, en outre, un moyen déformable (68) pour résister à la fracture de ladite portion de bride (34).

12. Appareil selon la revendication 11, caractérisé en ce qu'une ouverture (36) est pratiquée à travers ladite portion de bride (34) englobant une surface (38) opposée à ladite surface externe (16) dudit réceptacle (12), lesdits moyens de fixation (54, 56) englobant un élément (54) s'étendant à travers ladite ouverture (36), et en ce que ledit moyen déformable (58) englobe, sur ladite surface de portion de bride (38), plusieurs saillies (58) disposées en position adjacente à ladite ouverture (36) et venant se mettre en contact avec ladite surface externe (16) dudit réceptacle (12), si bien que ladite surface de portion de bride (38) est écartée de ladite surface externe (16) dudit réceptacle (12), la force requise pour écraser lesdites saillies (58) étant inférieure à la force requise pour rompre ladite portion de bride (34).

13. Appareil selon la revendication 12, caractérisé en ce que ledit élément (54) est un tenon (54) à filet externe monté à demeure sur ladite paroi (14), et en ce que lesdits moyens de fixation (54, 56) englobent en outre un écrou (56) vissé sur ledit tenon (54), si bien que ladite portion de bride (34) est capturée entre ledit écrou (56) et ladite surface externe (16) dudit réceptacle (12).

14. Appareil selon la revendication 11, caractérisé en ce que ledit joint d'étanchéité sans fin (44) entourant ladite portion de manchon (30) est disposé entre ledit manchon (20) et ladite surface externe (16) dudit réceptacle (12).

15. Appareil selon la revendication 1, caractérisé en ce que ledit joint d'étanchéité sans fin (44) disposé dans ledit évidement (40) possède une aire, lorsque ledit joint d'étanchéité (44) est à l'état non comprimé, qui est inférieure à ladite aire dudit évidement (40).

16. Appareil selon la revendication 15, caractérisé en ce que ledit manchon (20) englobe des surfaces opposées radialement interne et externe (32, 42) définissant partiellement ledit évidement (40), et en ce que ledit joint d'étanchéité (44) vient se mettre en contact avec lesdites surfaces interne et externe (32, 42) lorsque ledit joint d'étanchéité (44) est à l'état non comprimé.

17. Appareil selon la revendication 16, caractérisé en ce que ladite portion (30) dudit manchon (20) comporte une surface externe (32), et en ce que ladite surface radialement interne (32) est ladite surface externe (32) de ladite portion (30).

18. Appareil selon la revendication 16, caractérisé en ce que ladite surface radialement interne (32) est configurée et ledit joint d'étanchéité (44) possède une surface radialement interne (48) venant se mettre en contact avec ladite surface radialement interne (32) dudit manchon (20) et dont la configuration est différente de ladite configuration de ladite surface radialement interne (32) dudit manchon (20).

19. Appareil selon la revendication 15, caractérisé en ce que ledit évidement (40) est annulaire, et en ce que ledit joint d'étanchéité (44) est généralement annulaire et englobe une surface externe circulaire (42) et une surface interne (48) généralement circulaire dans laquelle sont pratiqués plusieurs évidements (50).

20. Appareil selon la revendication 15, caractérisé en ce que ledit manchon (20) englobe une portion de bride (34) à travers laquelle est pratiquée une ouverture (34), à travers laquelle est pratiquée une ouverture (36) conçue pour que vienne s'y loger un tenon de montage (54) sur le réceptacle (12).

21. Appareil selon la revendication 20, caractérisé en ce qu'il comprend, en outre, un moyen déformable (58) pour résister à la fracture de ladite portion de bride (34).

22. Appareil selon la revendication 21, caractérisé en ce que ledit moyen déformable (58) englobe, sur ladite surface de manchon (38), plusieurs saillies (58) disposées en position adjacente à ladite ouverture (36) et venant se mettre en contact avec ladite surface externe (16) dudit réceptacle (12), de telle sorte que ladite surface de manchon (38) est écartée de ladite surface externe (16) dudit réceptacle (12), et en ce que la force requise pour écraser lesdites saillies (58) est inférieure à la force requise pour rompre ladite portion de bride (34).

23. Appareil selon la revendication 1, caractérisé en ce qu'il comprend, en outre, une portion de bride (34) dans laquelle est pratiquée une ouverture (36) conçue pour que vienne s'y loger un tenon de montage (54) sur le réceptacle (12), ainsi qu'un moyen déformable (58) pour résister à la fracture de ladite portion (34).

24. Appareil selon la revendication 23, caractérisé en ce que ladite portion (34) englobe une surface (38) conçue pour s'opposer à la surface externe (16) du réceptacle (12), et en ce que ledit moyen déformable (58) englobe, sur ladite surface (38), plusieurs saillies (58) disposées en position adjacente à ladite ouverture (36) et venant se mettre en contact avec ladite surface externe (16) dudit réceptacle (12), de telle sorte que ladite surface de la portion de manchon (38) est écartée de ladite surface externe (16) du réceptacle (12), la force requise pour écraser lesdites saillies (58) étant inférieure à la force requise pour rompre ladite portion de bride (34).

25. Appareil selon la revendication 23, caractérisé en ce que ledit joint d'étanchéité sans fin (44) entourant ladite portion de manchon (30) est conçue pour venir se disposer entre ledit manchon (20) et ladite surface externe (16) du réceptacle (12).
